# DEMANDE DE BREVET EUROPEEN

(11) **EP 1 067 817 A1**
(43) Date de publication de la demande: **10.01.2001**
(21) Numéro de dépôt: 00401632.5
(22) Date de dépôt: 08.06.2000
(51) Int. Cl.: H04Q 11/00

(54) **Repartiteur de lignes optiques**

(30) Priorité: 28.06.1999 FR 9908215
(71) Demandeur: ALCATEL, 75008 Paris (FR)
(72) Inventeur: Le Bouette, Claude, 91220 Bretigny sur Orge (FR); Sotom, Michel, 75015 Paris (FR); Ollivier, Francois-Xavier, 91630 Guibeville (FR)
(74) Mandataire: Sciaux, Edmond

(57) **Abrégé**

Pour résoudre un problème de modularité favorisant les sous-équipement et un problème de pertes énergétiques dans un répartiteur de lignes optiques du type tout optique, on prévoit qu'un bloc convertisseur primaire comporte un circuit de redondance susceptible d'émettre un signal optique avec une longueur d'onde différente de l'une quelconque des autres longueurs d'onde diffusées par les autres circuits convertisseurs de ce bloc primaire. Dans ce cas un coupleur en étoile chargé du brassage fréquenciel des signaux comportera de préférence P + 1 voies d'entrée pour P voies de sortie.

## Description

La présente invention a pour objet un répartiteur de lignes optiques utilisable dans un central de communication notamment quand des débits d'informations sont très élevés. Le répartiteur de l'invention est principalement un répartiteur du type tout optique, encore que certaines fonctions peuvent être effectuées par un passage dans un mode électronique avant un retour dans un mode optique.

Dans le domaine de la répartition des lignes, on dit aussi la commutation ou le brassage des lignes, la tâche à accomplir par un répartiteur est de permettre à un signal véhiculé par une ligne parmi N en entrée du répartiteur d'être acheminé sur une ligne parmi N' en sortie du répartiteur. Pour simplifier les explications, on prendra N' = N d'une part parce qu'une communication nécessite normalement autant d'appelants que d'appelés et d'autre part parce qu'on peut montrer que toute organisation différente peut se réduire à une répartition du type N par N.

Dans un répartiteur tout optique, les N lignes d'entrée sont des lignes optiques : des fibres optiques individualisées. En variante une même fibre peut supporter par multiplexage de longueur d'onde plusieurs signaux simultanément. Les signaux véhiculés par ces fibres optiques individualisées peuvent être modulés en amplitude sur une porteuse avec une même longueur d'onde pour tous, ou avec des longueurs d'onde différentes.

Un coeur de répartiteur comporte, normalement, des modules de brassage fréquenciel. Dans ce but, on fait en sorte que tous les signaux optiques distincts aboutissant sur un module de brassage modulent des porteuses avec des longueurs d'onde différentes. Les signaux sont ainsi "colorés" par des longueurs d'ondes différentes. Un module de brassage amalgame, ou mélange, en entrée tous les signaux à répartir ensemble, et distribue la totalité de cet ensemble à chaque fois sur plusieurs voies en sortie. Dans chacune de ces voies, des filtres fréquenciels permettent de sélectionner une longueur d'onde unique : un seul signal optique. La combinaison de la fonction de coloration, de la fonction de brassage et de celle de filtrage conduisent à l'orientation sélective recherchée.

L'opération de brassage fréquenciel conduit néanmoins, du seul fait que tous les signaux sont présents dans toutes les voies de sortie à ce que l'énergie répartie dans chacune de ces voies soit partagée. Elle est donc réduite.

En complément d'un tel brassage fréquenciel, notamment pour éviter une trop grande déperdition énergétique si le nombre de voies de sortie est trop important, on complète le brassage fréquenciel par une commutation spatiale au moyen de modules commutateurs spatiaux. Un commutateur spatial peut comporter dans son principe un miroir qui réfléchit un signal optique émanant d'une terminaison d'une fibre optique sur une parmi K terminaisons de fibres optiques réceptrices. Un commutateur K par K comporterait ainsi dans son principe K miroirs. On peut envisager également de connecter directement des férules de fibres optiques les unes sur les autres. Normalement un module commutateur spatial est optomécanique alors qu'un module fréquenciel est tout optique ou optoélectronique. Eventuellement des solutions tout optique peuvent être envisagées pour le brassage spatial, c'est-à-dire sans déplacement mécanique.

Une telle architecture conduit à deux types de problèmes. Premièrement le fait d'effectuer des brassages fréquenciels conduit à des déperditions importantes et nécessite la régénération des signaux optiques avant un acheminement subséquent. Deuxièmement un tel brassage fréquenciel requiert des dispositifs de coloration qui ont pour objet de convertir un signal véhiculé par une onde avec une longueur d'onde λi en un signal véhiculé par une onde avec une longueur d'onde λj. On connaît des convertisseurs de type tout optique, ou plus généralement de type optoélectronique. Ces convertisseurs sont des organes dont la fiabilité est la plus faible dans un répartiteur. Il leur arrive de tomber en panne. Pour éviter les conséquences néfastes de ces pannes, il est prévu dans les circuits d'un répartiteur normal une redondance du nombre de ces convertisseurs par rapport au nombre de signaux optiques à traiter.

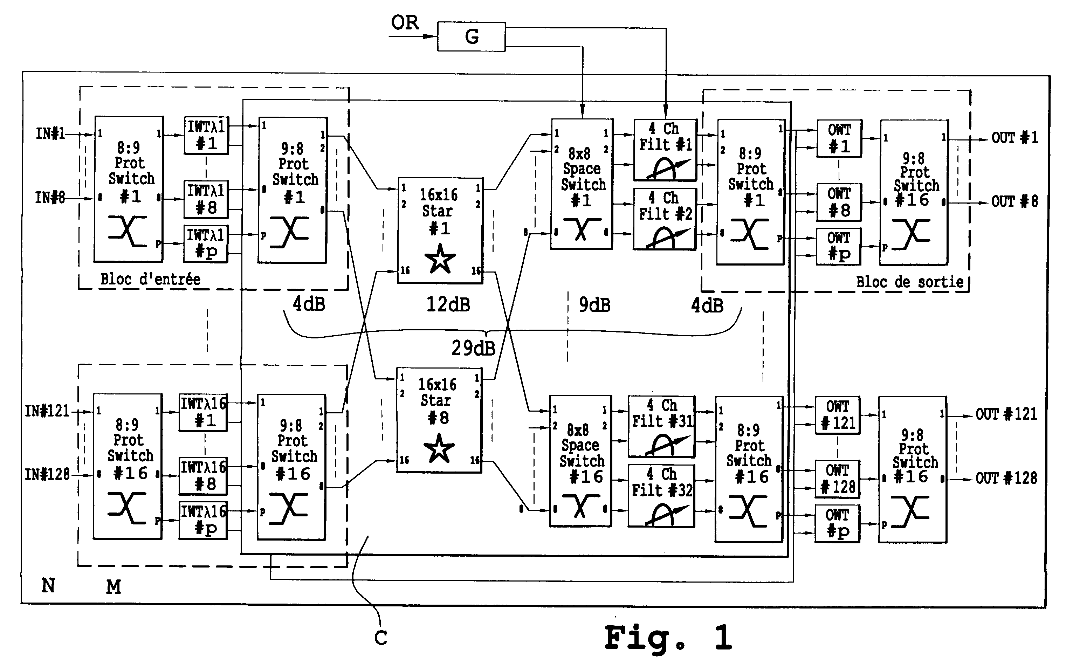

Par exemple sur la figure 1, on a représenté un répartiteur de l'état de la technique dans lequel un bloc d'entrée recevant P signaux optiques, pour simplifier ici P = 8, comporte P convertisseurs IWTλ1n°1 à IWTλ1n°8. Pour permettre l'adjonction d'un convertisseur redondant IWTλ1n°p (p comme protection), les convertisseurs doivent être précédés d'un commutateur de P vers P+ 1 (ici de 8 vers 9) et être suivis d'un commutateur de P + 1 vers P. Dans la solution présentée, un bloc d'entrée fournit ainsi P (8) signaux à une longueur d'onde λ1. D'autres blocs d'entrée parmi M possibles, M = 16 dans l'exemple montré, produisent des signaux avec des longueurs d'onde de λ2 à M. Chacune des P sorties d'un bloc d'entée est affectée d'un rang i pris parmi P. Les N = P x M sorties des M blocs d'entrée ensemble sont connectées aux entrées de P coupleurs en étoile possédant chacun M entrées d'un coeur C de répartition. Mais on peut avoir un nombre plus important de coupleurs en étoile si chacun d'eux a moins d'entrées. Un coupleur possède autant de sorties que d'entrées. Ces sorties sont affectées de rang i.

Par exemple un premier coupleur en étoile reçoit les signaux émanant de toutes les sorties de rang 1 des commutateurs de sortie des blocs d'entrée. Un dernier coupleur en étoile, numéro P (numéro 8), reçoit les entrées de rang P des commutateurs de sorties des blocs d'entrée. Autrement dit chaque coupleur en étoile reçoit sur ses entrées des signaux avec des longueurs d'onde différentes. Un tel coupleur mélange ainsi tous ces signaux et les distribue sur toutes ses sorties. Le mélange est sans risque pour la qualité des signaux puisque les couleurs de ceux-ci, les longueurs d'onde, sont différentes. Néanmoins du seul fait que les signaux sont distribués sur un nombre important de sorties, l'énergie distribuable ne peut qu'être réduite au prorata de ce nombre de sorties.

Selon ce qui a été indiqué précédemment, le brassage peut être de préférence complété par une commutation spatiale. Dans l'exemple représenté, toutes les voies de sortie de rang i des P coupleurs en étoile sont connectés à P entrées d'un commutateur spatial lui-même de rang i. En pratique un tel commutateur spatial reçoit ainsi en entrée P mélanges de signaux colorés de λ1 à λM. Dans une telle architecture un commutateur spatial commute des groupes de signaux, les mélanges, et non des signaux individuels.

Les sorties des commutateurs spatiaux sont reliés à des filtres qui permettent d'extraire une seule longueur d'onde dans chacun de ces mélanges. Les filtres et les commutateurs spatiaux sont commandés en fonction d'ordres d'orientation OR traités par un organe central G de commande.

Des blocs de sortie permettent de prélever les signaux en sortie des filtres et de les colorer en une longueur d'onde adaptée à leur acheminement subséquent. Les blocs de sortie comportent des convertisseurs comme les blocs d'entrée. Ces convertisseurs subissent les mêmes défauts de fiabilité que les convertisseurs d'entrée. Ils sont aussi complétés par des convertisseurs redondants.

Sur le plan pratique, pour des raisons de fiabilité, le coeur C de répartition est même dupliqué. Ainsi l'ensemble des commutateurs de sortie des blocs d'entrée, des coupleurs en étoile, des commutateurs spatiaux, des filtres et des commutateurs d'entrée des blocs de sortie est présent deux fois.

Plusieurs technologies sont envisageables pour ces différents organes. Pour les commutateurs de sortie des blocs d'entrée et les commutateurs d'entrée des blocs de sortie, si leur technologie est une technologie commutée, elle conduit à des pertes d'énergie de chaque signal transmis de l'ordre de 4 dB. Si la technologie est une technologie par diffusion (du type de celle utilisée dans un coupleur en étoile) la déperdition est plus importante. Elle est fonction du nombre de sorties et donc du nombre d'entrées du commutateur. Dans le cas où ce nombre est égal à huit comme représenté, la perte serait de 6 dB.

Un coupleur en étoile souffre des mêmes inconvénients et notamment lorsqu'il est un coupleur de 16 par 16, sa perte de transmission, pour chaque signal transmis, sur chaque ligne est de 12 dB. Le commutateur spatial présente une perte de 9 dB. D'une manière simplifiée on peut admettre qu'un coeur de répartition comme celui représenté sur la figure 1 induit alors une perte de 29 dB sur chaque signal. Cette perte peut être compensée, notamment dans les convertisseurs des blocs d'entrée et des blocs de sortie, par des amplifications simultanées à ces conversions. L'amplification peut néanmoins être effectuée autre part que dans ces convertisseurs. Dans le premier cas, une telle perte d'énergie peut être gênante parce qu'elle impose de choisir les différents composants d'une manière critique de ce point de vue.

L'architecture représentée à la figure 1 présente par ailleurs un inconvénient lorsqu'on ne veut pas équiper totalement un central de commutation avec tous les circuits représentés. Notamment si ce central est sous équipé, par exemple s'il n'a que huit voies d'entrée et huit voies de sortie, cette architecture ne convient pas bien. En effet même pour un nombre faible d'entrées, il faudrait ainsi un seul bloc d'entrée mais tous les coupleurs en étoile. Ces coupleurs en étoile ne sont pas en eux-mêmes très chers mais l'ensemble des liaisons à organiser conduit en pratique à prévoir un groupe de quinze à vingt baies pour placer tous les équipements. Quand le central de commutation est sous-équipé, pour des raisons de standardisation toutes ces baies restent nécessaires même si chacune d'elle est au trois quart vide. On subit donc un problème d'arrangement mécanique et d'encombrement de volume.

Une solution en variante consisterait à n'utiliser qu'un seul coupleur en étoile qui recevrait tous les signaux à traiter. Il faudrait cependant dans ce cas équiper tous les blocs d'entrée dans lesquels un nombre réduit de positions serait équipées. Par exemple, on pourrait choisir le premier coupleur en étoile et équiper en correspondance toutes les positions de rang 1 des M = 16 blocs d'entrée. Ceci conduirait par ailleurs à devoir réaliser dans ces M blocs d'entrée une protection par un convertisseur redondant. Cette redondance serait M fois plus importante que celle de la première version de sous-équipement puisque chaque bloc d'entrée devrait comporter un convertisseur redondant. Une telle solution conduit donc à trop de matériel quand elle est sous-équipée en plus de la déperdition de 29 dB.

Il serait encore possible de concevoir des architectures spécifiques. Mais celles-ci présenteraient l'inconvénient de nécessiter des études complexes pour chaque cas de sous-équipement, et une gestion quasiment inextricable pour un service après-vente confronté à un parc d'installations disparates.

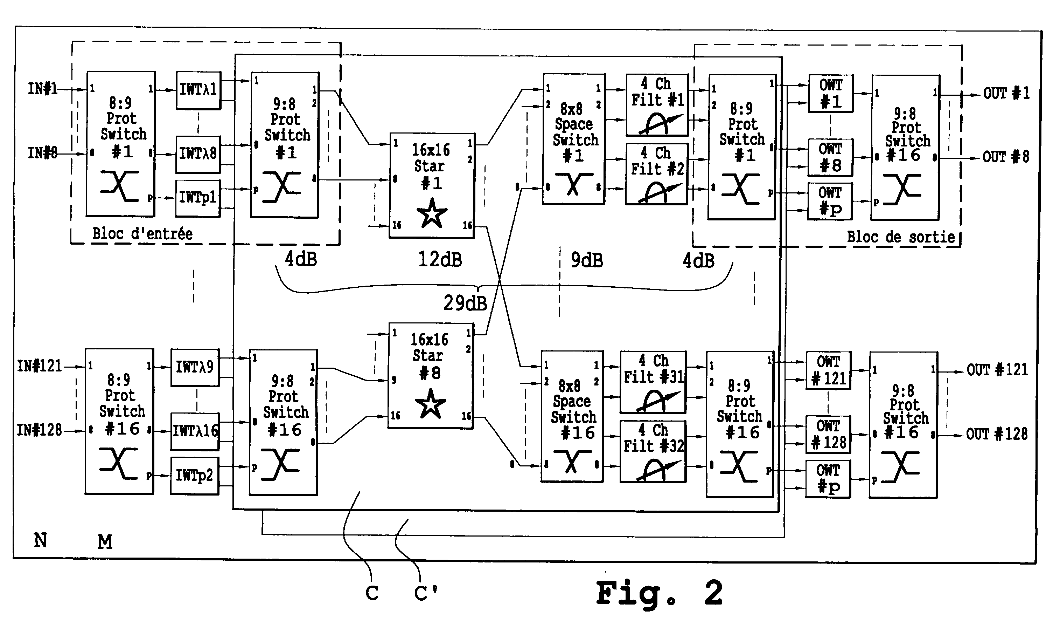

Dans une variante, représentée sur la figure 2, l'architecture des blocs d'entrée a été modifiée de façon à résoudre de manière systématique le problème de sous-équipement. Dans ces blocs d'entrée, au lieu que tous les convertisseurs convertissent les signaux admis vers une seule longueur d'onde i, ils les convertissent vers P longueurs d'onde distinctes. Dans ce cas un coupleur en étoile, de P par P, ou dans un exemple de 2P par 2P (16 par 16) permet, d'adopter une structure modulaire s'adaptant bien mieux aux besoins des clients.

Néanmoins cette architecture présente un inconvénient important résidant dans la présence d'au moins un convertisseur redondant IWTp1. En effet, ce convertisseur redondant doit être à même de suppléer la défaillance de l'un quelconque des convertisseurs IWTλ1 à IWTλ8. Deux technologies sont envisageables. Soit ce convertisseur redondant est en fait constitué par P (8) convertisseurs commutables, soit il est constitué par un convertisseur accordable en fréquence. D'une part le coût de ce convertisseur redondant est bien supérieur au coût des convertisseurs redondants de la solution de la figure 1. D'autre part la fiabilité du bloc d'entrée serait très inférieure justement parce que des sources de ces convertisseurs modulables, des lasers en pratique, sont les éléments les moins fiables de ces convertisseurs. En définitive, la fiabilité du bloc d'entrée serait divisée par P, divisée par huit.

En effet, un des convertisseurs redondant lui-même peut tomber en panne. Or, s'il tombe en panne toute la redondance tombe en panne. Il serait possible que le convertisseur redondant qui tombe en panne ne soit pas le même qu'un convertisseur de base du bloc d'entrée qui doit être remplacé par ce convertisseur redondant. En pratique l'arrêt du bloc d'entrée sera P fois plus fréquent. En outre, la perte énergétique est du même ordre que dans le cas de la figure 1 : elle reste de 29 dB.

L'invention a pour objet de remédier aux inconvénients cités et de proposer une architecture qui permet à la fois la modularité et notamment le sous-équipement, mais qui permet en même temps de la rendre moins critique par une réduction de la perte en ligne au moment de la répartition. En outre l'invention vise à réduire le coût des blocs d'entrée sans en réduire la fiabilité.

L'idée de l'invention est de retenir une solution du type de celle de la figure 2 dans laquelle cependant le convertisseur redondant n'aura pas à se substituer exactement à un convertisseur défaillant. Au contraire dans l'invention le convertisseur redondant aura à colorer le signal optique dans une longueur d'onde distincte des P longueurs d'onde, une longueur d'onde de redondance. La longueur d'onde de redondance sera différente de toutes les longueurs d'onde normalement distribuées par un bloc d'entrée.

En outre le commutateur de sortie du bloc d'entrée, ainsi que le commutateur d'entrée du bloc de sortie, seront supprimés. Dans ces conditions les coupleurs en étoile au lieu de réaliser un brassage des P voies d'entrée sur P voies de sortie réaliseront un brassage de P + 1 voies d'entrée sur P voies de sortie. Eventuellement ces coupleurs en étoile peuvent réaliser un multiple n de ce type de brassage. On montrera alors qu'en agissant ainsi la perte énergétique supplémentaire réalisée dans le coupleur en étoile est bien inférieure au gain de déperdition résultant de la suppression des commutateurs de sortie du bloc d'entrée et des commutateurs d'entrée du bloc de sortie.

Le gain matériel sera donc double, d'une part ces commutateurs inutiles ne sont plus présents et d'autre part les amplifications seront moins critiques. On montrera que le reste de la chaîne de commutation reste similaire. Le coeur C devra par ailleurs être modifié pour effectuer une commutation du type P + 1 par P au lieu d'une commutation du type P par P. Mais cette modification est minime. En pratique, l'organe de gestion de la commutation devra tenir compte, en plus des ordres OR d'orientation, d'informations émanant des blocs d'entrée signalant l'intervention ou non d'un convertisseur redondant dans ces blocs. Mais ces signalements sont déjà disponibles dans l'état de la technique, notamment pour informer le service après vente de la nécessité d'intervenir à plus ou moins brève échéance sur un équipement dont les circuits redondants ont été mis à contribution parce qu'un circuit normal a été défaillant. Dans l'invention, tout simplement on utilisera ces signalements dans l'organe de gestion pour réaliser les répartitions.

L'invention a donc pour objet un répartiteur de lignes optiques avec une architecture optique redondante comportant
- N ports d'entrée pour recevoir N lignes optiques,
- M blocs convertisseurs primaires de longueur d'onde raccordés chacun en entrée à P=N/M ports d'entrée et produisant chacun en sortie des signaux optiques à P longueurs d'ondes distinctes,
- un coeur de brassage fréquenciel et de commutation spatiale raccordé en entrée aux sorties des blocs convertisseurs primaires, comportant des modules de brassage pour commuter des liaisons entre des voies d'entrée et des voies de sortie de ce module,
- M blocs convertisseurs secondaires de longueur d'onde raccordés chacun en entrée à des voies de sortie du coeur et en sortie à P=N/M ports de sortie,
- les convertisseurs primaires et ou secondaires comportant des circuits de conversion en nombre redondant par rapport au nombre des signaux avec des longueurs d'onde différentes pour palier la défaillance de l'un d'entre eux,
caractérisé en ce que
- un bloc convertisseur primaire comporte un circuit de conversion redondant pour convertir un des P signaux reçus en entrée en un signal à une longueur d'onde λP+1 différente des P longueurs d'onde, et P+1 sorties,
- et ou un bloc convertisseur secondaire comporte un circuit de conversion redondant pour convertir un de P+1 signaux reçus en entrée avec une longueur d'onde quelconque parmi les longueurs d'onde générées par les blocs convertisseurs primaires, et P sorties.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1 et 2 : des architectures déjà commentées de répartiteurs de lignes optiques de l'état de la technique ;
- Figure 3 : une représentation générale d'un répartiteur de lignes optiques selon l'invention ;
- Figure 4 : une représentation hybride d'un convertisseur de longueur d'onde, d'un convertisseur redondant et des convertisseurs redondants de l'invention ;
- Figures 5a et 5b : une illustration d'un coupleur ou d'un filtre multicouches interférentiel et son diagramme de transmission ;
- Figure 6 : une modification simple d'un coupleur en étoile de l'état de la technique pour l'adapter à la mise en oeuvre de l'invention ;
- Figures 7a et 7b : une représentation schématique d'un exemple d'un filtre optique fréquenciel et son diagramme spectral.

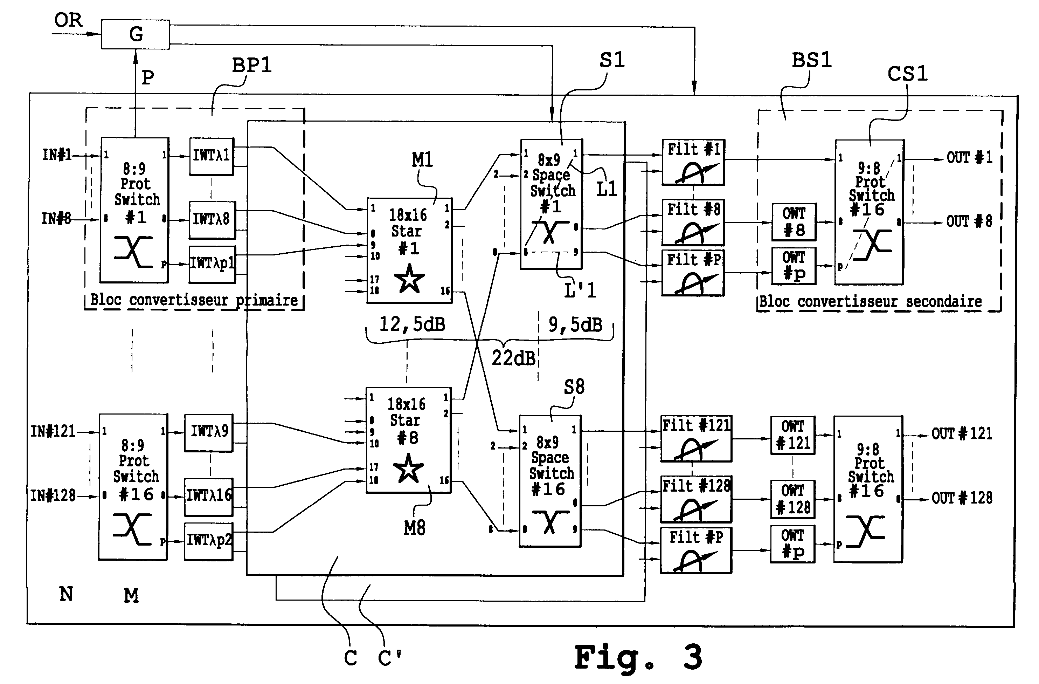

La figure 3 montre un répartiteur de lignes optiques selon l'invention. Ce répartiteur, du type tout optique comporte une architecture redondante. Le répartiteur comporte N ports d'entrée pour recevoir N lignes optiques. Dans un exemple, commun avec celui de l'état de la technique présenté jusqu'ici, N = 128. Le répartiteur comporte également M blocs convertisseurs primaires. Les blocs convertisseurs primaires comportent chacun P = N/M ports d'entrée. Dans l'exemple où M est égal à 16, P est égal à 8. Un coeur C de brassage fréquenciel et de commutation spatiale est raccordé aux sorties des blocs convertisseurs primaires. Le coeur C comporte des modules de brassage Mi pour coupler des voies d'entrée et des voies de sortie de ce module. Le répartiteur de l'invention comporte également M blocs convertisseurs secondaires raccordés, en entrée, aux voies de sortie de modules S de sélection spatiale et, en sortie, à P = N/M ports de sortie du répartiteur. Les blocs convertisseurs comportent des circuits de conversion en nombre redondant par rapport au nombre des signaux avec des longueurs d'onde différentes pour palier la défaillance de l'un d'entre eux. Par exemple un bloc convertisseur d'entrée comprend des convertisseurs IWTλ1 à IWTλ8 et un convertisseur redondant IWTλp1 avec la longueur d'onde λP+1 différente de chacune des longueurs d'onde λ1 à λ8, qui elles-mêmes sont différentes les unes des autres. En sortie, des convertisseurs de sorties OWTn°1 à OWTn°8 sont complétés par un convertisseur redondant OWTn°p. Les blocs convertisseurs primaires et secondaires présentent comme différences par rapport aux blocs d'entrée et de sortie de l'état de la technique qu'ils ne comportent plus respectivement de commutateur de sortie ni de commutateur d'entrée.

Selon une caractéristique essentielle de l'invention, un bloc convertisseur primaire comporte un circuit de conversion redondant IWTλp1 pour convertir un des signaux reçus en entrée en un signal à une longueur d'onde λP+1 différente des P longueurs d'onde des autres convertisseurs IWTλ1 à IWTλ8. En outre, bien naturellement un tel bloc convertisseur primaire comporte P + 1 sorties. Selon une seconde caractéristique importante, le coeur C comporte des modules de brassage, au moins un module de brassage le module M1, qui comportent des circuits de couplage pour coupler P + 1 voies d'entrée d'un module et P voies de sortie de ce module. Dans l'exemple P + 1 vaut 9 et P vaut 8.

Selon un premier résultat la déperdition énergétique n'est plus que de 22 dB, 12,5 dB étant perdus dans un convertisseur M1 et 9,5 dB étant perdus dans un commutateur spatial agissant en complément. Toute chose étant égales par ailleurs, par rapport à l'état de la technique figures 1 et 2 où on reconnaît une perte de 29 dB, un gain de 7 dB est obtenu. Bien entendu le gain matériel résulte de l'absence des commutateurs de sortie des blocs d'entrée, et des commutateurs d'entrée des blocs de sortie. Mais en outre l'architecture est totalement modulaire : un module M1 convenant à un bloc convertisseur primaire BP1 et à un bloc convertisseur secondaire BS1. Il est donc très simple de réaliser un sous-équipement.

Sur le plan pratique de manière à utiliser les matériels déjà standardisés pour des réalisations de l'état de la technique, on pourra choisir comme module de brassage M1 des coupleurs en étoile de 16 par 16(2P par 2P) modifiés en coupleurs de 18 par 16 [2(P+1) par 2P] selon l'invention. Ceci conduira à connecter deux blocs convertisseurs primaires à un même coupleur en étoile M1. Dans ce cas, les huit entrées normales du premier bloc convertisseur BP1 seront reliées aux huit entrées 1 à 8 du coupleur en étoile M1. Le convertisseur redondant, diffusant un signal optique à une longueur d'onde λP+1 sera relié à l'entrée 9 du coupleur M1. Huit autres sorties normales d'un autre bloc convertisseur primaire seront reliées aux entrées 10 à 17 du module M1. Autant les huit premières sorties normales du bloc convertisseur primaire BP1 délivrent des signaux avec des longueurs d'onde λ1 à λ8 différentes, autant ces huit autres sorties normales délivreront des signaux avec des longueurs d'onde λ9 à λ16 différentes entre elles et différentes des longueurs d'onde λ1 à λ8. L'autre bloc convertisseur primaire propose, selon l'invention, un autre convertisseur à une autre longueur d'onde λP + 2. Les signaux délivrés par le convertisseur redondant de ce deuxième bloc convertisseur sont appliqués à l'entrée 18 du convertisseur M1. Les deux blocs convertisseurs primaires associés convertissent ainsi 2P signaux optiques d'entrée en 2P signaux optiques avec des longueurs d'onde distinctes, que ces longueurs d'ondes soient des longueurs d'onde normales λ1 à λ16 (λ2P) ou qu'elles incorporent une ou deux des deux longueurs d'onde de redondance λP+1 et λP+2.

Dans une telle architecture, le coeur comportera M/2 modules de brassage fréquenciel. Chaque module est prévu pour coupler 2P + 2 voies d'entrée et 2P voies de sortie de ce module. C'est le cas du module M1 représenté ici.

Plutôt que de retenir une architecture avec deux blocs convertisseurs primaire seulement par module de brassage fréquenciel, on peut choisir de tels modules de brassage plus important, par exemple acceptant trois ou quatre, voire plus, blocs convertisseurs primaires. En outre, plutôt que de ne retenir qu'un seul convertisseur primaire redondant par bloc convertisseur primaire, on peut choisir de munir ces blocs convertisseurs primaires de deux, ou plus de deux convertisseurs primaires redondants et dont les fréquences seraient différentes entre elles, et également différentes des fréquences des autres convertisseurs primaires reliés, avec eux, à un même module de brassage fréquenciel.

Comme la répartition fréquencielle peut ne pas être suffisante, un coeur de répartition selon l'invention est composé d'une part de premiers étages de multiplexage en longueur d'onde et de diffusion des signaux multiplexés et d'autre part d'un deuxième étage de commutation spatiale. Ce coeur est raccordé en entrée aux sorties des blocs convertisseurs primaires. De ce fait, comme dans l'état de la technique, les modules tels que M1 seront assistés par des modules de commutation spatiale S1 à S8. Les modules de commutation spatiale sont reliés aux blocs convertisseurs secondaires par une batterie de filtres FILTn°i effectuant la sélection fréquencielle recherchée.

De la même façon que l'existence d'un circuit convertisseur redondant dans un bloc convertisseur primaire retentit en une entrée redondante d'un module de brassage fréquenciel, la présence d'un circuit convertisseur redondant dans un bloc convertisseur secondaire induira dans un module Si de commutation spatiale l'existence d'une sortie redondante. On a ainsi montré dans le bloc convertisseur secondaire BS1 la défaillance d'un circuit convertisseur OWTn°1. La liaison L1 qui, pour des raisons de commutation, liées aux ordres OR devait aboutir à ce circuit convertisseur OWTn°1 est détournée en une liaison de réparation L'1. La liaison L'1 emprunte le circuit convertisseur redondant OWTn°p. On profite alors de l'existence d'un commutateur de sortie CS1 du bloc convertisseur secondaire BS1 pour acheminer sur la sortie désirée les signaux disponibles sur la liaison de redondance L'1.

De la même façon que précédemment plus de deux convertisseurs primaires pouvaient être raccordés à un même module de brassage, il est possible d'adopter en sortie une architecture différente de celle représentée. Par exemple, les blocs convertisseurs secondaires peuvent comporter n P sorties avec n différent de 1.

D'une manière générale, en adoptant la terminologie suivante, on peut arriver avec les paramètres suivants au résultat suivant pour un exemple :

| **Ensemble de cross-connection :** | |
|---|---|
| N1 : nombre d'entrées | N1 = 128 |
| N2 : nombre de sorties | N2 = 128 |

| **Bloc Convertisseur Primaire :** | |
|---|---|
| P1 : nombre de convertisseurs de longueur d'onde actifs | P1 = 8 |
| R1 : nombre de convertisseurs de longueur d'onde de redondance | R1 = 1 |
| P1 entrées et P1+R1 sorties | P1+R1 =9 |
| n1 : nombre de blocs convertisseurs primaires connectés a un coupleur en étoile | n1 = 2 |
| nombre de longueurs d'ondes différentes à générer : | n1x(P1+R1)+18 |
| M1 blocs Convertisseur Primaire au total de telle sorte que M1xP1=N1 : | M1 = 16 |
| | |

| **Bloc Convertisseur Secondaire** | |
|---|---|
| P2 : nombre de convertisseurs de longueur d'onde actifs | P2 = 8 |
| R2 : nombre de convertisseurs de longueur d'onde de redondance | R2 = 1 |
| P2+R2 entrees | P2+R2 =9 |
| n2 : nombre de blocs convertisseurs secondaires connectes à un selecteur spatial | n2 = 1 |
| P2 sorties | |
| M2 blocs Convertisseur Secondaire au total de telle sorte que M2xP2=N2 | M2 = 16 |
| | |

| **Bloc de multiplexage frequenciel et de selection spatiale :** | |
|---|---|
| M1x(P1+R1) entrees | 144 |
| M2x(P2+R2) sorties | 144 |
| Coupleur étoile : | |
| n1x(P1+R1) entrees | 18 |
| M2/n2 sorties | 16 |
| M1/n1 coupleurs étoiles au total | 8 |
| Selecteur Spatial : | |
| M1/n1 entrees | 8 |
| n2x(P2+R2) sorties | 9 |
| M2/n2 selecteurs au total | 16 |

Il aurait été possible, en outre, d'adopter une structure hybride, avec un bloc convertisseur primaire comme celui de l'invention induisant un module M1, mais en reliant la sortie de ce dernier à un bloc de sortie comme celui représenté sur la figure 2. Ou, au contraire, on aurait pu choisir une structure avec un commutateur spatial S1 et un bloc convertisseur secondaire BS1 comme dans l'invention, mais en adoptant en entrée un bloc d'entrée comme celui de la figure 2 et un module de brassage correspondant. Dans ces deux derniers cas on ne bénéficierait que de la suppression d'un seul commutateur d'entrée, ou de sortie. Le résultat énergétique serait moins bon mais toutefois meilleurs que celui de l'état de la technique. Ces solutions dégradées peuvent convenir pour modifier des équipements déjà partiellement installés.

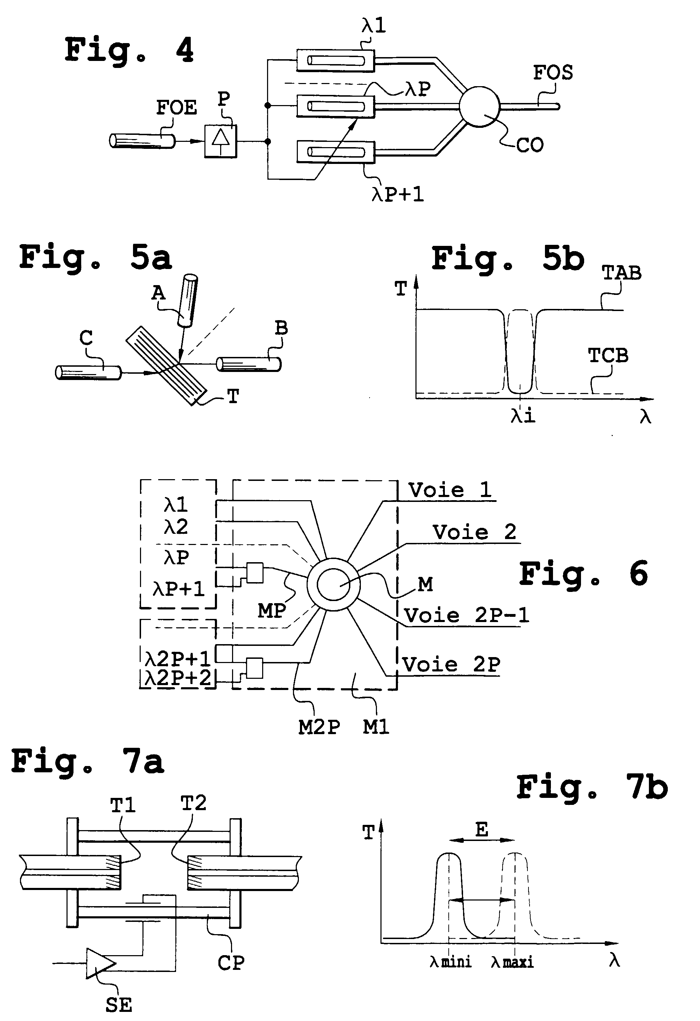

La figure 4 montre la structure générale d'un circuit convertisseur de longueur d'onde. Une fibre optique d'entrée FOE est reliée à un détecteur D qui produit un signal électronique. Ce signal électronique est utilisé pour attaquer, à titre de commande de modulation, une source laser émettant une longueur d'onde λ1 ou une source laser à une autre longueur d'onde λi avec i inférieur ou égal P. Dans l'invention le convertisseur redondant produit un signal à une longueur d'onde λP+1 différente de l'une quelconque des longueurs d'onde λ1 à λP. La figure 4 montre ensemble les deux variantes possibles de réalisation d'un circuit convertisseur redondant d'un bloc d'entrée dans la variante de la figure 2. Soit ce convertisseur redondant comporte P sources λ1 à λP. Ces P sources reçoivent toutes le signal du détecteur et délivrent toutes leur signal optique dans un coupleur CO relié en sortie à une fibre optique de sortie FOS. Ou bien la source supplémentaire est une source accordable, et dans ce cas le coupleur n'est pas utile. Néanmoins dans les deux cas, la réalisation est onéreuse. Dans l'invention le circuit convertisseur est un circuit simple, seule sa longueur d'onde, λP+1, est différente des longueurs d'onde connues, elle n'a pas besoin d'être réglable.

Figures 5a et 5b, on montre un exemple d'un circuit de couplage de type multicouches interférentielles. Dans ce cas un substrat T, réalisé par des couches de matériaux de différentes natures interposées, est placé en réflexion sur le chemin de propagation d'une onde émanant d'une origine A ou, en transmission, sur le chemin d'une onde émanant d'une origine C. Par des réflexions multiples, l'onde réfléchie présente un déficit de réflexion pour une longueur d'onde λi qui est justement l'onde pour laquelle un signal est transmis correctement. Un tel coupleur sert à réaliser un couplage entre deux ondes A et C de longueurs d'onde différentes. La figure 6 montre une adaptation d'un coupleur en étoile M de l'état de la technique en un coupleur M1 selon l'invention. Avec un tel coupleur M, une des entrées, par exemple l'entrée MP ou l'entrée M2P est connectée à une sortie d'un coupleur comme celui de la figure 5a qui reçoit sur ses deux entrées des signaux A et C aux fréquences λP et λP+1 d'une part ou λ2P+1 et λ2P+2 d'autre part. Un tel coupleur présente très peu de pertes d'insertion.

Les figures 7a et 7b montrent un exemple de réalisation de filtres permettant d'effectuer réellement une sélection en longueur d'onde. Deux terminaisons T1 et T2 de deux fibres optiques sont placées en vis-à-vis et sont traitées pour être chacune hautement réfléchissante. L'écart qui sépare ces terminaisons est tel qu'il favorise la transmission d'une onde dont la longueur d'onde en est un sous-multiple. Cet écart est par exemple réglé par un cristal piézo-électrique CP excité par une source électrique SE. La figure 7b montre, en fonction du signal d'excitation la modification possible de la longueur d'onde transmise et la bande passante d'un tel filtre.

Alors que dans l'architecture des figures 1 et 2 les filtres faisaient partie des coeurs C de répartition, dans l'invention les filtres peuvent être associés aux blocs convertisseurs secondaires. Cette architecture présente l'avantage que si les coeurs sont dupliqués en C et C' (pour des raisons de fiabilité et d'une manière connue), il n'est pas nécessaire de dupliquer les filtres. En conséquence, alors que la réalisation de l'invention conduisait à disposer pour P signaux à traiter de P + 1 filtres, soit un nombre apparemment supérieur, en fait on gagne en nombre de filtres puisque ceux-ci ne sont plus présents deux fois dans les coeurs C et C' dupliqués. Le gain est égal à MxP+1.

La solution de l'invention nécessite néanmoins de commander ces filtres en fonction de l'état de réparation d'un ou plusieurs des blocs convertisseurs primaires. En effet, figure 1, dans l'état de la technique les ordres de calage des filtres dépendaient uniquement du brassage réalisé dans les coupleurs en étoile et dans les commutateurs spatiaux. Ceci se justifiait puisque les longueurs d'onde λ1 à λP étaient reproduites par les circuits de redondance. Dans l'invention, étant donné qu'un signal pourra être véhiculé avec une longueur d'onde λP+1, il convient que les filtres qui ont à sélectionner ces signaux puissent les extraire en fonction du besoin. Dans ces conditions, l'organe général de commande G devra recevoir en plus des ordres de répartition OR, des signalements relatifs à la mise en oeuvre de la protection de redondance dans les blocs convertisseurs primaires. De préférence dans ce cas, les longueurs d'onde λP+1 et λ2P+2 seront contenues dans l'éventail de la figure 7b des longueurs d'onde λmini1 à λmaxiP et qui sont atteignables par les possibilités de réglage de l'excitation de réglage.

## Revendications

1. Répartiteur de lignes optiques avec une architecture optique redondante comportant
- N ports d'entrée pour recevoir N lignes optiques,
- M blocs convertisseurs primaires de longueur d'onde raccordés chacun en entrée à P=N/M ports d'entrée et produisant chacun en sortie des signaux optiques à P longueurs d'ondes distinctes,
- un coeur de brassage fréquenciel et commutation spatiale raccordé en entrée aux sorties des blocs convertisseurs primaires, comportant des modules pour commuter des liaisons entre des voies d'entrée et des voies de sortie de ce module,
- M blocs convertisseurs secondaires de longueur d'onde raccordés chacun en entrée à des voies de sortie du coeur et en sortie à P=N/M ports de sortie,
- les convertisseurs primaires et ou secondaires comportant des circuits de conversion en nombre redondant par rapport au nombre des signaux avec des longueurs d'onde différentes pour palier la défaillance de l'un d'entre eux,
caractérisé en ce que
- un bloc convertisseur primaire comporte un circuit de conversion redondant pour convertir un des P signaux reçus en entrée en un signal à une longueur d'onde λP+1 différente des P longueurs d'onde, et P+1 sorties,
- et ou un bloc convertisseur secondaire comporte un circuit de conversion redondant pour convertir un de P+1 signaux reçus en entrée avec une longueur d'onde quelconque parmi celles générées par les blocs convertisseurs primaires, et P sorties.

2. Répartiteur selon la revendication 1, caractérisé en ce que le coeur de brassage fréquenciel et commutation spatiale comporte d'une part un premier étage (M1) de multiplexage en longueur d'onde et de diffusion des signaux multiplexés et d'autre part d'un deuxième étage (S1) de commutation spatiale.

3. Répartiteur selon l'une des revendications 1 à 2, caractérisé en ce que
- un bloc convertisseur primaire comporte un circuit de conversion redondant pour convertir un des P signaux reçus en entrée en un signal à une longueur d'onde λP+1 différente des P longueurs d'onde, et P+1 sorties, et en ce que
- le coeur comporte un module de brassage fréquenciel comportant des circuits pour coupler P+1 voies d'entrée de ce module fréquenciel par diffusion à P voies de sortie de ce module fréquenciel.

4. Répartiteur selon l'une des revendications 1 à 2, caractérisé en ce que
- un bloc convertisseur secondaire comporte un circuit de conversion redondant pour convertir un des P signaux reçus en entrée avec une longueur d'onde parmi 2P+2 longueurs d'onde différentes en un signal à une longueur d'onde donnée, et en ce que
- le coeur comporte un module de brassage spatial diffusant comportant des circuits de commutation pour commuter des liaisons entre P voies d'entrée de ce module spatial et P+1 voies de sortie de ce module spatial.

5. Répartiteur selon l'une des revendications 1 à 4, caractérisé en ce qu'il comporte deux blocs convertisseurs primaires qui convertissent 2P signaux optiques d'entrée en 2P signaux optiques avec des longueurs d'onde distinctes.

6. Répartiteur selon l'une des revendications 1 à 5, caractérisé en ce que le coeur comporte M/2 modules de brassage fréquenciel pour coupler 2P+2 voies d'entrée par diffusion à 2P voies de sortie de ce module.

7. Répartiteur selon l'une des revendications 1 à 6, caractérisé en ce que le coeur comporte des modules de commutation spatiale raccordés aux modules de brassage fréquenciel et aux blocs convertisseurs secondaires.

8. Répartiteur selon l'une des revendications 1 à 7, caractérisé en ce que le coeur comporte des ensembles dupliqués de modules.

9. Répartiteur selon l'une des revendications 1 à 8, caractérisé en ce que les blocs convertisseurs secondaires comportent des filtres dont la fréquence est accordée en fonction de l'état de fonctionnement des blocs convertisseurs primaires.

10. Répartiteur selon l'une des revendications 1 à 9, caractérisé en ce que la longueur d'onde λP+1 est proche des P longueurs d'onde.

11. Répartiteur selon l'une des revendications 1 à 10, caractérisé en ce que les blocs convertisseurs d'entrée comportent un commutateur d'entrée avec P entrées et P+1 sorties et P+1 circuits convertisseurs reliés par leur P+1 sorties directement sur les voies d'entrée du coeur.

12. Répartiteur selon l'une des revendications 1 à 11, caractérisé en ce que les blocs convertisseurs de sortie comportent P+1 circuits convertisseurs reliés par leur P+1 entrées directement sur les voies de sortie du coeur et un commutateur de sortie avec P+1 entrées et P sorties.
